# FASCICULE DE BREVET EUROPEEN

(11) **EP 4 335 537 B1**
(45) Date de publication et mention de la délivrance du brevet: **12.08.2026**
(21) Numéro de dépôt: 23193291.4
(22) Date de dépôt: 24.08.2023
(51) Int. Cl.: B01D 65/02, C12G 3/08

(54) **INSTALLATION DE FILTRATION D'UN LIQUIDE, EN PARTICULIER DE VIN, ET UN PROCEDE DE FILTRATION D'UN LIQUIDE, EN PARTICULIER DE VIN, AVEC UNE TELLE INSTALLATION**
ANLAGE ZUM FILTRIEREN EINER FLÜSSIGKEIT, INSBESONDERE WEIN, UND EIN VERFAHREN ZUM FILTRIEREN EINER FLÜSSIGKEIT, INSBESONDERE WEIN, MIT EINER SOLCHEN ANLAGE
INSTALLATION FOR FILTERING A LIQUID, IN PARTICULAR WINE, AND A METHOD FOR FILTERING A LIQUID, IN PARTICULAR WINE, WITH SUCH AN INSTALLATION

(30) Priorité: 08.09.2022 FR 2209000
(43) Date de publication de la demande: 13.03.2024
(73) Titulaire: Bucher Vaslin, 49290 Chalonnes sur Loire (FR)
(72) Inventeur: DOBROWOLSKI, Eric, 49380 CHAVAGNES (FR); TCACIUC, Eugène, 49000 ANGERS (FR)
(74) Mandataire: Ipsilon

(56) Documents cités:
- EP-A1- 4 019 110
- WO-A1-2014/061695
- JP-A- 2000 225 324
- US-A1- 2016 136 577
- US-A1- 2020 024 557
- US-A1- 2021 163 863
- US-A1- 2021 370 234

## Description

La présente invention concerne une installation de filtration d'un liquide, en particulier d'une boisson, telle que du vin, et un procédé de filtration d'un liquide, en particulier d'une boisson telle que du vin, avec une telle installation.

Elle concerne en particulier une installation de filtration d'un liquide, en particulier de vin, comprenant au moins une unité de filtration, une unité de lavage de l'unité de filtration et une unité de pilotage, ladite unité de filtration comprenant au moins un module de filtration tangentielle , le ou chaque module de filtration tangentielle comprenant une enceinte logeant au moins un matériau filtrant colmatable, tel qu'une membrane, divisant l'enceinte en au moins une zone de rétentat équipée d'au moins une entrée d'admission de liquide à filtrer et au moins une zone de perméat équipée d'au moins une sortie d'évacuation de liquide filtré , et ladite unité de lavage comprenant au moins un réservoir dit de lavage raccordé par un circuit de circulation de fluide à la zone de perméat du ou d'au moins l'un des modules de filtration.

La filtration est connue comme l'illustre le document US 2021/0370234.

La filtration de liquide, en particulier de boisson, telle que du vin, est destinée à éliminer les substances, telles que des levures ou autres, contenues dans ledit liquide, afin notamment d'augmenter la durée de conservation de ladite boisson. Le problème de la filtration réside dans le colmatage du matériau filtrant servant à la filtration. Ce colmatage réduit les performances de la filtration. Pour éviter un colmatage trop rapide, il est connu de procéder à un lavage du matériau filtrant encore appelé rétrolavage. Ce lavage consiste à faire circuler dans le module de filtration à contre-courant, c'est-à-dire depuis la zone de perméat vers la zone de rétentat, un liquide issu du réservoir de lavage. Ce rétrolavage réduit le rendement de la filtration car il oblige à interrompre la filtration pendant sa réalisation. Parallèlement, ce rétrolavage génère une éjection de rétentat du module de filtration, ce rétentat étant en général réinjecté dans le module de filtration en entrée dudit module de filtration ce qui augmente le volume à traiter par le module de filtration. Les fabricants sont donc à la recherche de solutions permettant d'optimiser le fonctionnement d'une telle installation sans nuire à la qualité du rétrolavage ni à la récupération du rétentat expulsé du module de filtration suite au rétrolavage.

A cet effet, l'invention a pour objet une installation de filtration d'un liquide, en particulier de vin, comprenant au moins une unité de filtration, une unité de lavage de l'unité de filtration et une unité de pilotage, ladite unité de filtration comprenant au moins un module de filtration tangentielle, le ou chaque module de filtration tangentielle comprenant une enceinte logeant au moins un matériau filtrant colmatable, tel qu'une membrane, divisant l'enceinte en au moins une zone de rétentat équipée d'au moins une entrée d'admission de liquide à filtrer et au moins une zone de perméat équipée d'au moins une sortie d'évacuation de liquide filtré, et ladite unité de lavage comprenant au moins un réservoir dit de lavage raccordé par un circuit de circulation de fluide à la zone de perméat du ou d'au moins l'un des modules de filtration, caractérisée en ce que le circuit de circulation de fluide raccordant le ou au moins l'un des réservoirs de lavage de l'unité de lavage à la zone de perméat du ou d'au moins l'un des modules de filtration est un circuit de lavage du matériau filtrant dudit module de filtration configuré pour assurer un lavage du matériau filtrant du module de filtration par une circulation à contre-courant du fluide issu du réservoir de lavage dans le module de filtration, en ce que ledit réservoir de lavage associé au circuit de lavage dudit module de filtration présente une communication fluidique avec la zone de rétentat dudit module de filtration, cette zone de rétentat formant la ou une source d'alimentation en fluide dudit réservoir de lavage et en ce que la communication fluidique entre la zone de rétentat du module de filtration et le réservoir de lavage comprend au moins un dispositif de séparation liquide/solide.

Par l'expression « pour assurer un lavage du matériau filtrant du module de filtration par une circulation à contre-courant du fluide issu du réservoir de lavage dans le module de filtration », on entend que le circuit de lavage du matériau filtrant du module de filtration comprend au moins une entrée d'alimentation en fluide formée par le réservoir de lavage et une sortie d'évacuation de fluide débouchant dans la zone de perméat du module de filtration. Le fluide de ce circuit de lavage issu du réservoir de lavage circule dans le module de filtration à contre-courant, c'est-à-dire depuis la zone de perméat vers la zone de rétentat.

Le fait que, le ou au moins l'un des réservoirs de lavage qui est raccordé à la zone de perméat du ou d'au moins l'un des modules de filtration par un circuit de lavage présente une communication fluidique avec la zone de rétentat dudit module de filtration, cette zone de rétentat formant la ou une source d'alimentation en fluide dudit réservoir de lavage, permet une circulation en boucle entre la zone de rétentat et la zone de perméat en passant par l'unité de lavage. La circulation en boucle est formée par l'enchaînement zone de rétentat/unité de lavage/zone de perméat/zone de rétentat. Cette circulation en boucle permet d'une part, d'optimiser le traitement du rétentat expulsé du module de filtration lors du rétrolavage en l'utilisant comme fluide d'alimentation du réservoir de lavage, d'autre part de remplir en temps masqué, c'est-à-dire pendant la filtration, ledit réservoir de lavage. L'utilisation du rétentat expulsé comme fluide d'alimentation du réservoir de lavage sans passage par le module de filtration permet de réduire la quantité de fluide plus concentré à traiter par ledit module de filtration et donc une réduction de la vitesse de colmatage. Il doit être noté que lorsque l'unité de filtration comprend plusieurs modules de filtration en parallèle, l'unité de lavage peut être commune à plusieurs modules de filtration.

Selon un mode de réalisation de l'invention, le ou au moins l'un des dispositifs de séparation liquide/solide équipant la communication fluidique entre la zone de rétentat du module de filtration et le réservoir de lavage présente au moins une entrée et une sortie, l'entrée du dispositif de séparation liquide/solide est en communication fluidique avec la zone de rétentat dudit module de filtration par un circuit dit de circulation de rétentat pour une alimentation en rétentat du dispositif de séparation liquide/solide, et en ce que la sortie du dispositif de séparation liquide/solide est en communication fluidique avec le réservoir de lavage par un circuit dit d'alimentation en fluide dudit réservoir de lavage.

De préférence, le dispositif de séparation liquide/solide est un dispositif de filtration de préférence tangentielle.

Selon un mode de réalisation de l'invention, le circuit de lavage et le circuit de circulation de rétentat sont des circuits obturables équipés chacun d'au moins un organe d'obturation monté mobile entre une position ouverte et une position fermée et l'une unité de pilotage est configurée pour commander les organes d'obturation pour leur passage d'une position à une autre. Le pilotage des organes d'obturation permet d'ajuster d'une part, le volume de liquide du réservoir de lavage utilisé pour le rétrolavage, d'autre part, le volume de rétentat éliminé du module de filtration lors de l'opération de rétrolavage pour aider à l'opération de filtration. La filtration peut ainsi être mieux maitrisée.

Selon un mode de réalisation de l'invention, l'installation comprend une configuration dite en mode filtration dans laquelle, l'entrée d'admission de liquide à filtrer de la zone de rétentat et la sortie d'évacuation de liquide filtré de la zone de perméat qui sont obturables sont à l'état ouvert et les organes d'obturation des circuits de lavage et de circulation de rétentat sont à l'état fermé, et une configuration dite en mode lavage dans laquelle l'entrée d'admission et la sortie d'évacuation obturables sont à l'état fermé et les organes d'obturation des circuits de lavage et de circulation de rétentat sont à l'état ouvert. La configuration dite en mode lavage dans laquelle l'entrée d'admission et la sortie d'évacuation obturables sont à l'état fermé et les organes d'obturation des circuits de lavage et de circulation de rétentat sont à l'état ouvert permet d'assurer, en parallèle d'une vidange du réservoir de lavage, une alimentation en rétentat du séparateur liquide/solide à partir du rétentat chassé du module de filtration par le liquide issu du réservoir de lavage.

Selon un mode de réalisation de l'invention, le circuit d'alimentation en fluide du réservoir de lavage comprend au moins un organe de fermeture dudit circuit présentant un état ouvert et un état fermé dudit circuit et l'unité de pilotage est configurée pour commander le passage d'un état à un autre dudit organe de fermeture. La présence d'un organe de fermeture sur le circuit d'alimentation en fluide du réservoir de lavage permet d'empêcher un reflux de liquide de lavage dans ledit circuit d'alimentation en fluide au-delà de l'organe de fermeture dans la configuration en mode lavage tout en autorisant un remplissage en temps masqué du réservoir de lavage dans la configuration en mode filtration.

Selon un mode de réalisation de l'invention, l'unité de pilotage est configurée pour, dans la configuration en mode filtration, commander successivement le passage dudit organe de fermeture d'un état à un autre du circuit d'alimentation en fluide du réservoir de lavage. Le fait que l'unité de pilotage soit configurée pour, dans la configuration en mode filtration, commander successivement le passage dudit organe de fermeture d'un état à un autre du circuit d'alimentation en fluide du réservoir de lavage permet un remplissage en temps masqué du réservoir de lavage.

Selon un mode de réalisation de l'invention, l'unité de pilotage est configurée pour, dans la configuration en mode filtration, commander successivement le passage dudit organe de fermeture d'un état correspondant à un état ouvert du circuit d'alimentation en fluide du réservoir de lavage à un état correspondant à un état fermé dudit circuit d'alimentation en fluide du réservoir de lavage.

Selon un mode de réalisation de l'invention, l'installation comprend un dispositif de détermination d'un paramètre représentatif d'un colmatage du matériau filtrant dudit module de filtration. La présence d'un dispositif de détermination d'un paramètre représentatif d'un colmatage du matériau filtrant dudit module de filtration, tel qu'un dispositif de mesure de la pression dite transmembranaire du matériau filtrant du module de filtration, permet un pilotage plus précis de l'installation.

Selon un mode de réalisation de l'invention, l'unité de pilotage est configurée pour commander au moins les organes d'obturation du circuit de lavage et du circuit de circulation de rétentat en fonction au moins des données fournies par le dispositif de détermination d'un paramètre représentatif d'un colmatage du matériau filtrant dudit module de filtration. A nouveau, cette disposition permet d'ajuster d'une part, le volume de liquide du réservoir de lavage utilisé pour le rétrolavage, d'autre part, le volume de rétentat éliminé du module de filtration lors de l'opération de rétrolavage pour aider à l'opération de filtration. La filtration peut ainsi être mieux maitrisée.

L'invention a encore pour objet un procédé de filtration d'un liquide, en particulier de vin, avec une installation de filtration comprenant au moins une unité de filtration, une unité de lavage de l'unité de filtration et une unité de pilotage, ladite unité de filtration comprenant au moins un module de filtration tangentielle, le ou chaque module de filtration tangentielle comprenant une enceinte logeant au moins un matériau filtrant colmatable, tel qu'une membrane, divisant l'enceinte en au moins une zone de rétentat équipée d'au moins une entrée d'admission de liquide à filtrer et au moins une zone de perméat équipée d'au moins une sortie d'évacuation de liquide filtré, et ladite unité de lavage comprenant au moins un réservoir dit de lavage raccordé par un circuit de circulation de fluide à la zone de perméat du ou d'au moins l'un des modules de filtration, caractérisé en ce que, pour le ou au moins l'un des réservoirs de lavage de l'unité de lavage dont le circuit de circulation de fluide raccordant ledit réservoir de lavage à la zone de perméat du ou d'au moins l'un des modules de filtration est un circuit de lavage du matériau filtrant dudit module de filtration configuré pour assurer un lavage du matériau filtrant du module de filtration par une circulation à contre-courant du fluide issu du réservoir de lavage dans le module de filtration, ledit procédé comprend une étape d'alimentation en fluide du réservoir de lavage à partir de la zone de rétentat dudit module de filtration, cette zone de rétentat formant la ou une source d'alimentation en fluide dudit réservoir de lavage en communication fluidique avec ladite zone de rétentat, la communication fluidique entre la zone de rétentat du module de filtration et le réservoir de lavage comprenant au moins un dispositif de séparation liquide/solide.

Selon un mode de mise en œuvre du procédé, le procédé est caractérisé en ce que l'installation de filtration est du type précité.

### Brève description des dessins

L'invention sera bien comprise à la lecture de la description suivante d'exemples de réalisation, en référence aux dessins annexés dans lesquels :
[Fig. 1] représente une vue schématique d'une installation conforme à l'invention comportant un module de filtration ;
[Fig. 2] représente vue schématique d'une installation conforme à l'invention comportant plusieurs modules de filtration fonctionnant en parallèle ;
[Fig. 3] représente sous forme de vues schématiques les différentes configurations d'une installation conforme à l'invention ;
[Fig. 4] représente une vue en perspective d'une installation conforme à l'invention.

Comme mentionné ci-dessus, l'invention a pour objet une installation de filtration d'un liquide, en particulier d'une boisson, telle que du vin, et le procédé de filtration associé.

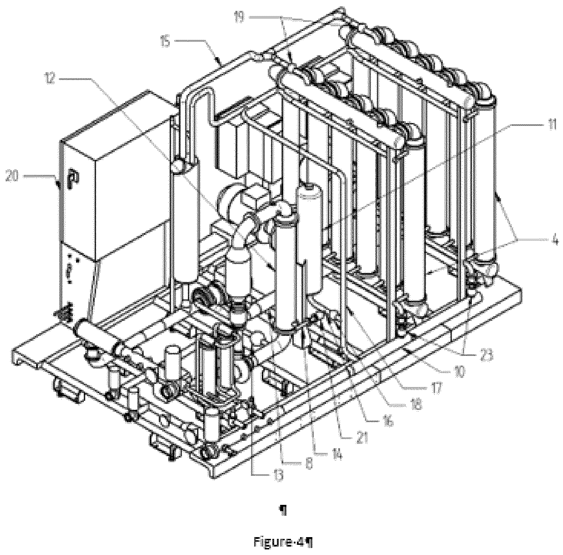

Un tel liquide contient des sédiments ou impuretés devant être éliminés par filtration. L'installation 1 de filtration du type de celle, par exemple, représentée à la figure 4 comprend une unité de filtration 2, une unité de lavage 3 de l'unité de filtration 2 et une unité de pilotage 20.

L'unité de lavage 3 est une unité de décolmatage du matériau 6 filtrant de l'unité de filtration 2, qui sera décrite plus en détail ci-après.

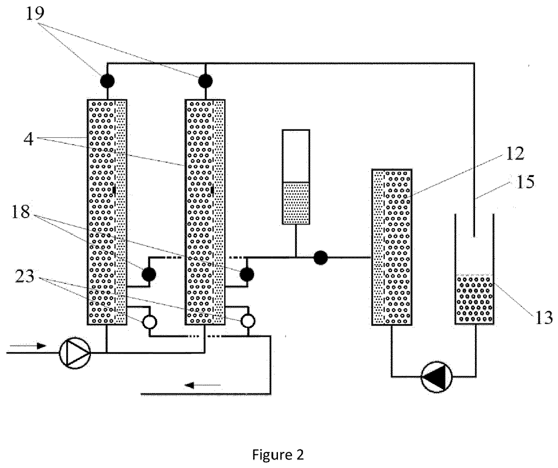

L'unité de filtration 2 comprend un ou plusieurs modules 4 de filtration tangentielle. Dans le cas où l'unité de filtration 2 comprend plusieurs modules 4 de filtration tangentielle, comme illustré à la figure 2, ces modules 4 de filtration tangentielle fonctionnent en parallèle. L'unité de lavage 3 peut, dans ce cas, être commune à plusieurs modules 4 de filtration tangentielle ou distincte pour chaque module 4 de filtration tangentielle.

Comme les modules 4 de filtration tangentielle, lorsqu'ils sont en nombre égal ou supérieur à deux, sont identiques ou similaires, un seul de ces modules 4 de filtration tangentielle sera décrit ci-après.

Ce module 4 de filtration tangentielle comprend une enceinte 5 logeant au moins un matériau 6 filtrant divisant l'enceinte 5 en au moins une zone de rétentat 7 équipée d'au moins une entrée d'admission de liquide à filtrer 8 et au moins une zone de perméat 9 équipée d'au moins une sortie d'évacuation de liquide filtré 10.

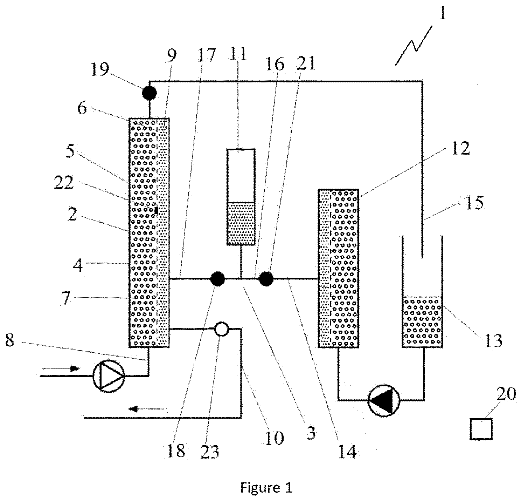

Dans l'exemple représenté à la figure 1, le matériau 6 filtrant colmatable est une membrane. L'entrée d'admission de liquide à filtrer 8 est munie d'une pompe qui permet, selon qu'elle fonctionne, d'alimenter ou non l'entrée d'admission de liquide à filtrer 8. L'entrée d'admission de liquide à filtrer 8 est donc une entrée obturable, dont l'organe d'obturation est ici formé par la pompe.

La sortie d'évacuation de liquide filtré 10 du module 4 de filtration tangentielle est quant à elle équipée d'un organe d'obturation, tel qu'une vanne, pilotable, représentée en 23 aux figures.

L'unité de lavage qui, comme mentionné ci-dessus, peut être commune à plusieurs modules 4 de filtration tangentielle, ou distincte pour chaque module 4 de filtration tangentielle, comprend, quant à elle, au moins un réservoir de lavage 11 raccordé par un circuit de lavage 17 à la zone de perméat 9 du ou d'au moins l'un des modules 4 de filtration, pour permettre, par une circulation à contre-courant du fluide issu du réservoir de lavage 11 dans le module 4 de filtration tangentielle, un lavage du matériau 6 filtrant du module 4 de filtration tangentielle.

Lorsque l'installation 1 de filtration comprend un seul module 4 de filtration tangentielle, comme illustré à la figure 1, l'installation 1 de filtration comprend un seul réservoir de lavage 11 raccordé par un circuit de lavage 17 à la zone de perméat 9 du module 4 de filtration.

Quand l'installation 1 de filtration comprend plusieurs modules 4 de filtration tangentielle fonctionnant en parallèle comme illustré à la figure 2, le réservoir de lavage 11 est idéalement commun à l'ensemble des modules 4 de filtration tangentielle. Bien évidemment, en variante, il peut être individualisé. Chaque module de filtration peut ainsi disposer de son propre réservoir de lavage.

Le réservoir 11 de lavage qui est raccordé à la zone de perméat 9 du module 4 de filtration par un circuit de lavage 17 présente une communication fluidique avec la zone de rétentat 7 dudit module 4 de filtration. Cette zone de rétentat 7 forme la ou une source d'alimentation en fluide du réservoir de lavage 11 pour une circulation en boucle du fluide entre la zone de rétentat et la zone de perméat dudit module de filtration tangentielle, en passant par l'unité de lavage.

Il en est de même à la figure 1, pour chaque module 4 de filtration tangentielle et le réservoir de lavage 11 commun.

On note que, dans l'exemple représenté aux figures 1 à 4, la communication fluidique entre la zone de rétentat 7 du module 4 de filtration et le réservoir de lavage 11 comprend au moins un dispositif 12 de séparation liquide/solide. Ce dispositif 12 de séparation liquide/solide présente au moins une entrée 13 et une sortie 14. L'entrée 13 du dispositif 12 de séparation liquide/solide est en communication fluidique avec la zone de rétentat 7 dudit module 4 de filtration par un circuit dit de circulation de rétentat 15 pour une alimentation en rétentat du dispositif 12 de séparation liquide/solide, et la sortie 14 du dispositif 12 de séparation liquide/solide est en communication fluidique avec le réservoir de lavage 11 par un circuit dit d'alimentation en fluide 16 dudit réservoir de lavage 11.

Il en est de même à la figure 2 pour chaque module 4 de filtration tangentielle et le réservoir de lavage 11 commun.

Ce réservoir de lavage 11 est raccordé à la zone de perméat du ou des modules 4 de filtration associés par un circuit de lavage 17 du type de celui décrit ci-dessus. Ce circuit de lavage 17 comprend donc au moins une entrée d'alimentation en fluide formée par le réservoir de lavage et une sortie d'évacuation de fluide débouchant dans la zone de perméat du module de filtration.

Dans l'exemple représenté, le dispositif 12 de séparation liquide/solide est un dispositif de séparation par filtration tangentielle.

On note que le circuit de lavage 17 et le circuit de circulation de rétentat 15 sont des circuits obturables équipés chacun d'au moins un organe d'obturation 18, 19 montés mobiles entre une position ouverte et une position fermée. Chaque organe d'obturation 18 ou 19 est pilotable par l'unité de pilotage 20. Ladite unité de pilotage se présente sous la forme d'un système électronique et informatique qui comprend par exemple un microprocesseur et une mémoire de travail. Selon un aspect particulier, l'unité de pilotage peut se présenter sous la forme d'un automate programmable. Autrement dit, les fonctions et étapes décrites peuvent être mise en œuvre sous forme de programme informatique ou via des composants matériels (p. ex. des réseaux de portes programmables). En particulier, les fonctions et étapes opérées par l'unité de pilotage ou ses modules peuvent être réalisées par des jeux d'instructions ou modules informatiques implémentés dans un processeur ou contrôleur ou être réalisées par des composants électroniques dédiés ou des composants de type circuit logique programmable (ou FPGA qui est l'acronyme de l'anglais field-programmable gate array , ce qui correspond littéralement à réseau de portes programmable in-situ) ou de type circuit intégré propre à une application (ou ASIC qui est l'acronyme de l'anglais application-specific integrated circuit, ce qui correspond littéralement à circuit intégré spécifique à une application ). Il est aussi possible de combiner des parties informatiques et des parties électroniques.

Lorsqu'il est précisé que l'unité ou des moyens ou modules de ladite unité sont configurés pour réaliser une opération donnée, cela signifie que l'unité comprend des instructions informatiques et les moyens d'exécution correspondants qui permettent de réaliser ladite opération et/ou que l'unité comprend des composants électroniques correspondants.

Chaque organe 18 ou 19 d'obturation peut être par exemple une électrovanne pilotable par l'unité de pilotage 20 pour son passage d'une position à une autre.

Le circuit d'alimentation en fluide 16 du réservoir de lavage 11 comprend quant à lui au moins un organe de fermeture 21 dudit circuit présentant un état ouvert et un état fermé du circuit.

L'unité de pilotage 20 est configurée pour commander le passage d'un état à un autre dudit organe de fermeture 21.

À nouveau, cet organe de fermeture 21 du circuit d'alimentation en fluide 16 du réservoir de lavage 11 peut être une électrovanne ou équivalent.

L'installation 1 de filtration comprend une configuration dite en mode filtration, dans laquelle l'entrée d'admission de liquide à filtrer 8 et la sortie d'évacuation de liquide filtré 10 sont à l'état ouvert pour permettre une circulation de liquide à filtrer à travers le module 4 de filtration tangentielle.

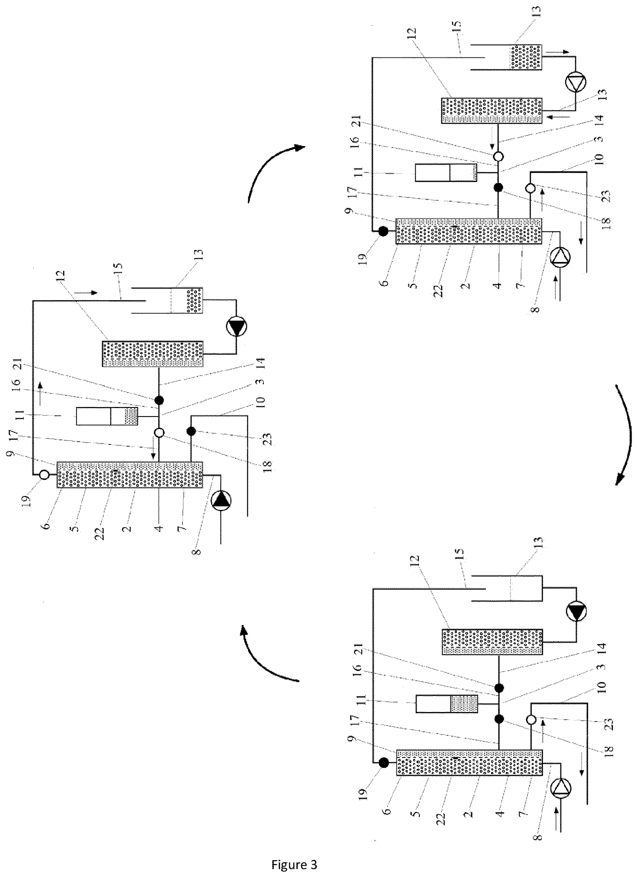

Cette configuration correspond à la figure 3, aux deux schémas en bas de page de la figure 3. Chaque rond blanc ou pompe en blanc correspond à un état ouvert et chaque rond noir ou pompe en noir à un état fermé.

Dans cette configuration en mode filtration dans laquelle l'entrée d'admission de liquide à filtrer 8 et la sortie d'évacuation de liquide filtré 10 des modules 4 de filtration sont à l'état ouvert, et l'organe d'obturation 18 du circuit de lavage 17 et l'organe 19 du circuit de circulation de rétentat 15 sont à l'état fermé, l'unité de pilotage 20 est configurée pour commander le passage de l'organe de fermeture 21 du circuit d'alimentation en fluide 16 du réservoir de lavage 11 qui s'étend entre le séparateur 13 liquide/solide et le réservoir de liquide 11 d'un état à un autre pour permettre notamment un remplissage en temps masqué du réservoir de lavage.

Ainsi, comme l'illustre la figure 3, l'unité de pilotage 20 est configurée pour, dans la configuration en mode filtration, commander successivement le passage dudit organe de fermeture 21 d'un état correspondant à un état ouvert du circuit d'alimentation en fluide 16 du réservoir de lavage 11 à un état correspondant à un état fermé du circuit d'alimentation en fluide 16 du réservoir de lavage 11, une fois le niveau de remplissage en fluide du réservoir de lavage 11 atteint.

Dans les exemples représentés, l'installation 1 comprend un dispositif 22 de détermination d'un paramètre représentatif d'un colmatage du matériau 6 filtrant du module 4 de filtration. Ce dispositif 22 de détermination d'un paramètre représentatif d'un colmatage du matériau 6 filtrant est par exemple formé par deux capteurs de pression disposés, l'un, dans la zone de rétentat, l'autre, dans la zone de perméat du module 4 de filtration tangentielle, ces capteurs de pression mesurant un différentiel de pression entre lesdites zones pour déterminer, en fonction de la valeur de ce différentiel, le colmatage du matériau 6 filtrant.

Ainsi, l'unité de pilotage 20 peut faire varier le temps ou le niveau d'ouverture/fermeture de l'organe 21 de fermeture du circuit d'alimentation en fluide 16 du réservoir 11 de lavage en fonction du niveau de remplissage souhaité. Il en est de même pour l'organe d'obturation 18 du circuit de lavage 17 et pour l'organe d'obturation 19 du circuit de circulation de rétentat 15.

L'installation 1 comprend encore une configuration dite en mode lavage dans laquelle l'entrée d'admission 8 de liquide à filtrer et la sortie d'évacuation 10 de liquide filtré obturables du module 4 de filtration sont à l'état fermé et les organes d'obturation 18 et 19 des circuits de lavage 17 et de circulation de rétentat 15 sont à l'état ouvert pour assurer, en parallèle d'une vidange du réservoir de lavage 11 dans la zone du perméat 9 du module de filtration, une alimentation du dispositif 12 de séparation liquide/solide à partir du rétentat chassé du module de filtration par le liquide issu du réservoir de lavage 11.

En pratique, le fonctionnement d'une telle installation de filtration est tel que suit : on suppose que l'installation est en configuration filtration comme illustré dans le schéma en bas, à gauche, à la figure 3. Le circuit de lavage 17 et le circuit de circulation de rétentat 19 sont fermés. Le liquide à filtrer pénètre dans le module 4 de filtration via l'entrée d'admission de liquide à filtrer 8 et en ressort par la sortie d'évacuation de liquide filtré 10. Le réservoir de lavage 11 est prérempli.

À l'issue d'une durée de filtration prédéterminée, l'unité de pilotage 20 commande le passage de la configuration en mode filtration à la configuration en mode lavage par la commande de la fermeture de l'entrée d'admission de liquide à filtrer 8 et de la sortie d'évacuation de liquide filtré 10, l'ouverture du circuit 17 de lavage par actionnement de l'organe 18 d'obturation dudit circuit et l'ouverture du circuit de circulation de rétentat 15 par actionnement de l'organe 19 d'obturation. La fermeture de l'entrée d'admission de liquide à filtrer 8 et de la sortie d'évacuation de liquide filtré 10 s'opère par simple arrêt de la pompe d'alimentation de l'entrée d'admission de liquide à filtrer 8 et par actionnement de l'organe d'obturation 23.

Le dispositif 12 de séparation liquide/solide comprend, en amont de son enceinte de filtration formant le cœur du dispositif de filtration tangentielle dudit dispositif 12 de séparation liquide/solide un réservoir tampon formant l'entrée 13 du dispositif de séparation liquide/solide. Le dispositif 12 de séparation liquide/solide collecte le rétentat de la zone de rétentat du module de filtration dans ce réservoir tampon au fur et à mesure de la vidange du réservoir 11 de lavage via le circuit 17 de lavage dans la zone de perméat dudit module 4 de filtration. Cette configuration en mode lavage est illustrée dans le schéma du haut de la figure 3. On comprend que la vidange du réservoir 11 de lavage via le circuit 17 de lavage dans la zone de perméat du module de filtration chasse le rétentat de la zone de rétentat vers le dispositif 12 de séparation liquide/solide.

Ce fonctionnement se traduit par un décolmatage du matériau filtrant du module 4 de filtration, en parallèle du remplissage du réservoir tampon du dispositif 12 de séparation liquide/solide.

Une fois ce rétrolavage achevé, à nouveau, l'unité de pilotage 20 intervient pour commander le passage de l'installation 1 de filtration en configuration en mode filtration. À cet effet, l'entrée d'admission de liquide à filtrer 8 et la sortie d'évacuation de liquide filtré 10 sont ouvertes, le circuit de lavage 17 est fermé et le circuit 15 d'alimentation en rétentat du dispositif 12 de séparation liquide/solide est fermé, tandis que le circuit d'alimentation en fluide 16 du réservoir de lavage 11 est ouvert pour assurer, en parallèle de la filtration du liquide à filtrer, un remplissage du réservoir de lavage 11 en rétentat, à partir du réservoir tampon disposé en amont de l'enceinte de filtration du dispositif 12 de séparation liquide/solide. Cette configuration est illustrée dans le schéma, en bas, à droite de la figure 3.

Une fois ce remplissage du réservoir de lavage 11 opéré, l'unité de pilotage 20 ferme le circuit d'alimentation en fluide 16 du réservoir de lavage pour revenir à la configuration en mode filtration correspondant au schéma en bas à gauche de la figure 3.

Les opérations décrites ci-dessus peuvent se poursuivre pendant le temps nécessaire à la filtration de l'ensemble du liquide à filtrer, sous forme d'une succession de configurations en mode filtration et en mode lavage.

Généralement, la configuration en mode lavage dure moins de trois secondes et le temps nécessaire au remplissage du réservoir de lavage dans la configuration en mode filtration dure environ dix secondes.

Bien évidemment, ces durées peuvent varier en fonction du niveau de colmatage du matériau filtrant.

Les configurations en mode filtration et en mode lavage s'enchaînent, à raison d'un passage en configuration en mode lavage toutes les trois minutes.

Le fonctionnement tel que décrit ci-dessus offre un grand nombre d'avantages par rapport à l'état de la technique. Le fonctionnement permet d'améliorer la filtration, notamment en limitant le colmatage du matériau filtrant.

Le remplissage en temps masqué du réservoir de lavage, à partir de rétentat issu du module de filtration et soumis à une séparation liquide/solide permet de ne pas pénaliser le fonctionnement du module de filtration tout en évitant d'augmenter le volume de liquide à filtrer, puisque le volume de rétentat chassé du module de filtration, en configuration en mode lavage de l'installation, sert uniquement au remplissage du réservoir de lavage sans passage par le module de filtration, au niveau duquel circule le liquide à filtrer. De plus, le remplissage en temps masqué du réservoir de lavage 11 par le dispositif de séparation 12 et non pas par le module de filtration 4 permet de limiter le niveau de concentration dans la zone de rétentat 7 et donc limiter le colmatage du module de filtration 4.

## Revendications

1. Installation (1) de filtration d'un liquide, en particulier de vin, comprenant au moins une unité de filtration (2), une unité de lavage (3) de l'unité de filtration (2) et une unité de pilotage (20), ladite unité de filtration (2) comprenant au moins un module (4) de filtration tangentielle , le ou chaque module (4) de filtration tangentielle comprenant une enceinte (5) logeant au moins un matériau (6) filtrant colmatable, tel qu'une membrane, divisant l'enceinte (5) en au moins une zone de rétentat (7) équipée d'au moins une entrée d'admission de liquide à filtrer (8) et au moins une zone de perméat (9) équipée d'au moins une sortie d'évacuation de liquide filtré (10), et ladite unité de lavage (3) comprenant au moins un réservoir dit de lavage (11) raccordé par un circuit de circulation de fluide à la zone de perméat (9) du ou d'au moins l'un des modules (4) de filtration, **caractérisée en ce que** le circuit de circulation de fluide raccordant le ou au moins l'un des réservoirs (11) de lavage de l'unité de lavage (3) à la zone de perméat (9) du ou d'au moins l'un des modules (4) de filtration est un circuit de lavage (17) du matériau (6) filtrant dudit module (4) de filtration configuré pour assurer un lavage du matériau (6) filtrant du module de filtration par une circulation à contre-courant du fluide issu du réservoir de lavage (11) dans le module (4) de filtration, **en ce que** ledit réservoir (11) de lavage associé au circuit de lavage (17) dudit module (4) de filtration présente une communication fluidique avec la zone de rétentat (7) dudit module (4) de filtration, cette zone de rétentat (7) formant la ou une source d'alimentation en fluide dudit réservoir de lavage (11) et **en ce que** la communication fluidique entre la zone de rétentat (7) du module (4) de filtration et le réservoir de lavage (11) comprend au moins un dispositif (12) de séparation liquide/solide.

2. Installation (1) de filtration d'un liquide selon la revendication 1, **caractérisée en ce que** le ou au moins l'un des dispositifs (12) de séparation liquide/solide équipant la communication fluidique entre la zone de rétentat (7) du module (4) de filtration et le réservoir de lavage (11) présente au moins une entrée (13) et une sortie (14), **en ce que** l'entrée (13) du dispositif (12) de séparation liquide/solide est en communication fluidique avec la zone de rétentat (7) dudit module (4) de filtration par un circuit dit de circulation de rétentat (15) pour une alimentation en rétentat du dispositif (12) de séparation liquide/solide, et **en ce que** la sortie (14) du dispositif (12) de séparation liquide/solide est en communication fluidique avec le réservoir de lavage (11) par un circuit dit d'alimentation en fluide (16) dudit réservoir de lavage (11).

3. Installation (1) de filtration d'un liquide selon la revendication 2, **caractérisée en ce que** le circuit de lavage (17) et le circuit de circulation de rétentat (15) sont des circuits obturables équipés chacun d'au moins un organe d'obturation (18, 19) monté mobile entre une position ouverte et une position fermée et **en ce que** l'unité de pilotage (20) est configurée pour commander les organes d'obturation (18, 19) pour leur passage d'une position à une autre.

4. Installation (1) de filtration d'un liquide selon la revendication 3, **caractérisée en ce que** l'installation (1) comprend une configuration dite en mode filtration dans laquelle, l'entrée d'admission (8) de liquide à filtrer de la zone de rétentat (7) et la sortie d'évacuation (10) de liquide filtré de la zone de perméat (9) qui sont obturables sont à l'état ouvert et les organes d'obturation (18, 19) des circuits de lavage (17) et de circulation de rétentat (15) sont à l'état fermé, et une configuration dite en mode lavage dans laquelle l'entrée d'admission (8) et la sortie d'évacuation (10) obturables sont à l'état fermé et les organes d'obturation (18, 19) des circuits de lavage (17) et de circulation de rétentat (15) sont à l'état ouvert.

5. Installation (1) de filtration d'un liquide selon l'une des revendications 2 à 4, **caractérisée en ce que** le circuit d'alimentation en fluide (16) du réservoir de lavage (11) comprend au moins un organe de fermeture (21) dudit circuit présentant un état ouvert et un état fermé dudit circuit et **en ce que** l'unité de pilotage (20) est configurée pour commander le passage d'un état à un autre dudit organe de fermeture (21).

6. Installation (1) de filtration d'un liquide selon la revendication 5, prise en combinaison avec la revendication 4, **caractérisée en ce que** l'unité de pilotage (20) est configurée pour, dans la configuration en mode filtration, commander successivement le passage dudit organe de fermeture (21) d'un état à un autre du circuit d'alimentation en fluide (16) du réservoir de lavage (11).

7. Installation (1) de filtration d'un liquide selon la revendication 5, prise en combinaison avec la revendication 4 ou la revendication 6, **caractérisée en ce que** l'unité de pilotage (20) est configurée pour, dans la configuration en mode filtration, commander successivement le passage dudit organe de fermeture (21) d'un état correspondant à un état ouvert du circuit d'alimentation en fluide (16) du réservoir de lavage (11) à un état correspondant à un état fermé dudit circuit d'alimentation en fluide (16) du réservoir de lavage (11).

8. Installation (1) de filtration d'un liquide selon l'une des revendications 1 à 7, **caractérisée en ce que** l'installation (1) comprend un dispositif (22) de détermination d'un paramètre représentatif d'un colmatage du matériau (6) filtrant dudit module (4) de filtration.

9. Installation (1) de filtration d'un liquide selon la revendication 8 prise en combinaison avec la revendication 3, **caractérisée en ce que** l'unité de pilotage (20) est configurée pour commander au moins les organes d'obturation (18) du circuit de lavage (17) et (19) du circuit de circulation de rétentat (15) en fonction des données fournies par le dispositif (22) de détermination d'un paramètre représentatif d'un colmatage du matériau (6) filtrant dudit module (4) de filtration.

10. Procédé de filtration d'un liquide, en particulier de vin, avec une installation (1) de filtration comprenant au moins une unité de filtration (2) et une unité de lavage (3) de l'unité de filtration (2) et une unité de pilotage (20), ladite unité de filtration (2) comprenant au moins un module (4) de filtration tangentielle, le ou chaque module (4) de filtration tangentielle comprenant une enceinte (5) logeant au moins un matériau filtrant colmatable, tel qu'une membrane, divisant l'enceinte (5) en au moins une zone de rétentat (7) équipée d'au moins une entrée d'admission de liquide à filtrer (8) et au moins une zone de perméat (9) équipée d'au moins une sortie d'évacuation de liquide filtré (10), et ladite unité de lavage (3) comprenant au moins un réservoir dit de lavage (11) raccordé par un circuit de circulation de fluide à la zone de perméat (9) du ou d'au moins l'un des modules (4) de filtration, **caractérisé en ce que**, pour le ou au moins l'un des réservoirs (11) de lavage de l'unité de lavage (3) dont le circuit de circulation de fluide raccordant ledit réservoir (11) de lavage à la zone de perméat (9) du ou d'au moins l'un des modules (4) de filtration est un circuit de lavage (17) du matériau (6) filtrant dudit module (4) de filtration configuré pour assurer un lavage du matériau (6) filtrant du module de filtration par une circulation à contre-courant du fluide issu du réservoir de lavage (11) dans le module (4) de filtration, ledit procédé comprend une étape d'alimentation en fluide du réservoir de lavage (11) à partir de la zone de rétentat (7) dudit module (4) de filtration, cette zone de rétentat (7) formant la ou une source d'alimentation en fluide dudit réservoir de lavage (11) en communication fluidique avec ladite zone de rétentat (7), la communication fluidique entre la zone de rétentat (7) du module (4) de filtration et le réservoir de lavage (11) comprenant au moins un dispositif (12) de séparation liquide/solide.

11. Procédé de filtration d'un liquide, en particulier de vin, selon la revendication 10, **caractérisé en ce que** l'installation (1) de filtration est conforme à l'une des revendications 2 à 9.

## Patentansprüche

1. Anlage (1) zur Filtration einer Flüssigkeit, insbesondere Wein, umfassend mindestens eine Filtrationseinheit (2), einer Spüleinheit (3) für die Filtrationseinheit (2) und eine Steuereinheit (20), wobei die Filtrationseinheit (2) mindestens ein Tangentialfiltrationsmodul (4) umfasst, wobei das oder jedes Tangentialfiltrationsmodul (4) ein Gehäuse (5) umfasst, das mindestens ein verstopfbares Filtermaterial (6) wie etwa eine Membran aufnimmt, welches das Gehäuses (5) in mindestens eine Retentatzone (7), die mit mindestens einem Zuführeinlass für zu filternde Flüssigkeit (8) ausgestattet ist, und mindestens eine Permeatzone (9), die mit mindestens einem Abführauslass für gefilterte Flüssigkeit (10) ausgestattet ist, teilt, und wobei die Spüleinheit (3) mindestens einen sogenannten Spültank (11) umfasst, der durch einen Fluidzirkulationskreislauf mit der Permeatzone (9) des oder mindestens eines der Filtrationsmodule (4) verbunden ist, **dadurch gekennzeichnet, dass** der Fluidzirkulationskreislauf, der den oder mindestens einen der Spültanks (11) der Spüleinheit (3) mit der Permeatzone (9) des oder mindestens eines der Filtrationsmodule (4) verbindet, ein Spülkreislauf (17) zum Spülen des Filtermaterials (6) des Filtrationsmoduls (4), der dazu ausgelegt ist, ein Spülen des Filtermaterials (6) des Filtrationsmoduls durch eine Gegenstromzirkulation des Fluids aus dem Spültank (11) in dem Filtrationsmodul (4) zu gewährleisten, dass der dem Spülkreislauf (17) des Filtrationsmoduls (4) zugeordnete Spültank (11) eine Fluidverbindung mit der Retentatzone (7) des Filtrationsmoduls (4) aufweist, wobei diese Retentatzone (7) die oder eine Fluidversorgungsquelle des Spültanks (11) bildet, und dass die Fluidverbindung zwischen der Retentatzone (7) des Filtrationsmoduls (4) und dem Spültank (11) mindestens eine Fest/Flüssig-Trennvorrichtung (12) umfasst.

2. Anlage (1) zur Filtration einer Flüssigkeit nach Anspruch 1, **dadurch gekennzeichnet, dass** die oder mindestens eine der Fest/Flüssig-Trennvorrichtungen (12), mit der die Fluidverbindung zwischen der Retentatzone (7) des Filtrationsmoduls (4) und dem Spültank (11) ausgestattet ist, mindestens einen Einlass (13) und einen Auslass (14) aufweist, dass der Einlass (13) der Fest/Flüssig-Trennvorrichtung (12) über einen sogenannten Retentatzirkulationskreislauf (15) zur Retentatversorgung der Fest/Flüssig-Trennvorrichtung (12) in Fluidverbindung mit der Retentatzone (7) des Filtrationsmoduls (4) steht und dass der Auslass (14) der Fest/Flüssig-Trennvorrichtung (12) über einen sogenannten Fluidversorgungskreislauf (16) des Spültanks (11) mit dem Spültank (11) in Fluidverbindung steht.

3. Anlage (1) zur Filtration einer Flüssigkeit nach Anspruch 2, **dadurch gekennzeichnet, dass** der Spülkreislauf (17) und der Retentatzirkulationskreislauf (15) absperrbare Kreisläufe sind, die jeweils mit mindestens einem Absperrelement (18, 19) ausgestattet sind, das zwischen einer Offenstellung und einer Geschlossenstellung beweglich montiert ist, und dass die Steuereinheit (20) dazu ausgelegt ist, die Absperrelemente (18, 19) zwecks ihres Übergangs von einer Stellung zu einer anderen zu steuern.

4. Anlage (1) zur Filtration einer Flüssigkeit nach Anspruch 3, **dadurch gekennzeichnet, dass** die Anlage (1) eine sogenannte Filtrationsbetriebkonfiguration umfasst, in welcher der Zuführeinlass (8) für die zu filternde Flüssigkeit der Retentatzone (7) und der Abführauslass (10) für die gefilterte Flüssigkeit der Permeatzone (9), die absperrbar sind, im geöffneten Zustand sind und die Absperrelemente (18, 19) des Spülkreislaufs (17) und des Retentatzirkulationskreislaufs (15) im geschlossenen Zustand sind, und eine sogenannte Spülbetriebkonfiguration, in welcher der absperrbare Zuführeinlass (8) und der absperrbare Abführauslass (10) im geschlossenen Zustand sind und die Absperrelemente (18, 19) des Spülkreislaufs (17) und des Retentatzirkulationskreislaufs (15) im geöffneten Zustand sind.

5. Anlage (1) zur Filtration einer Flüssigkeit nach einem der Ansprüche 2 bis 4, **dadurch gekennzeichnet, dass** der Fluidversorgungskreislauf (16) des Spültanks (11) mindestens ein Verschlusselement (21) des Kreislaufs umfasst, das einen geöffneten Zustand und einen geschlossenen Zustand des Kreislaufs aufweist, und dass die Steuereinheit (20) dazu ausgelegt ist, den Übergang des Verschlusselements (21) von einem Zustand zu einem anderen zu steuern.

6. Anlage (1) zur Filtration einer Flüssigkeit nach Anspruch 5 in Kombination mit Anspruch 4, **dadurch gekennzeichnet, dass** die Steuereinheit (20) dazu ausgelegt ist, in der Filtrationsbetriebkonfiguration nacheinander den Übergang des Verschlusselements (21) von einem Zustand zu einem anderen des Fluidversorgungskreislaufs (16) des Spültanks (11) zu steuern.

7. Anlage (1) zur Filtration einer Flüssigkeit nach Anspruch 5 in Kombination mit Anspruch 4 oder Anspruch 6, **dadurch gekennzeichnet, dass** die Steuereinheit (20) dazu ausgelegt ist, in der Filtrationsbetriebkonfigration nacheinander den Übergang des Verschlusselements (21) von einem Zustand, der einem geöffneten Zustand des Fluidversorgungskreislaufs (16) des Spültanks (11) entspricht, zu einem Zustand, der einem geschlossenen Zustand des Fluidversorgungskreislaufs (16) des Spültanks (11) entspricht, zu steuern.

8. Anlage (1) zur Filtration einer Flüssigkeit nach einem der Ansprüche 1 bis 7, **dadurch gekennzeichnet, dass** die Anlage (1) eine Vorrichtung (22) zur Bestimmung eines für eine Verstopfung des Filtermaterials (6) des Filtrationsmoduls (4) repräsentativen Parameters umfasst.

9. Anlage (1) zur Filtration einer Flüssigkeit nach Anspruch 8 in Kombination mit Anspruch 3, **dadurch gekennzeichnet, dass** die Steuereinheit (20) dazu ausgelegt ist, mindestens die Absperrelemente (18) des Spülkreislaufs (17) und (19) des Retentatzirkulationskreislaufs (15) in Abhängigkeit von den Daten, die von der Vorrichtung (22) zur Bestimmung eines für eine Verstopfung des Filtermaterials (6) des Filtrationsmoduls (4) repräsentativen Parameters übermittelt werden, zu steuern.

10. Verfahren zur Filtration einer Flüssigkeit, insbesondere Wein, mit einer Anlage (1) zur Filtration, umfassend mindestens eine Filtrationseinheit (2) und eine Spüleinheit (3) für die Filtrationseinheit (2) und eine Steuereinheit (20), wobei die Filtrationseinheit (2) mindestens ein Tangentialfiltrationsmodul (4) umfasst, wobei das oder jedes Tangentialfiltrationsmodul (4) ein Gehäuse (5) umfasst, das mindestens ein verstopfbares Filtermaterial wie etwa eine Membran aufnimmt, welches das Gehäuses (5) in mindestens eine Retentatzone (7), die mit mindestens einem Zuführeinlass für zu filternde Flüssigkeit (8) ausgestattet ist, und mindestens eine Permeatzone (9), die mit mindestens einem Abführauslass für gefilterte Flüssigkeit (10) ausgestattet ist, teilt, und wobei die Spüleinheit (3) mindestens einen sogenannten Spültank (11) umfasst, der über einen Fluidzirkulationskreislauf mit der Permeatzone (9) des oder mindestens eines der Filtrationsmodule (4) verbunden ist, **dadurch gekennzeichnet, dass** bei dem oder mindestens einem der Spültanks (11) der Spüleinheit (3), dessen Fluidzirkulationskreislauf, der den Spültank (11) mit der Permeatzone (9) des oder mindestens eines der Filtrationsmodule (4) verbindet, ein Spülkreislauf (17) zum Spülen des Filtermaterials (6) des Filtrationsmoduls (4) ist, der dazu ausgelegt ist, ein Spülen des Filtermaterials (6) des Filtrationsmoduls durch eine Gegenstromzirkulation des Fluids aus dem Spültank (11) in dem Filtrationsmodul (4) zu gewährleisten, das Verfahren einen Schritt zur Fluidversorgung des Spültanks (11) ausgehend von der Retentatzone (7) des Filtrationsmoduls (4) umfasst, wobei diese Retentatzone (7) die oder eine Fluidversorgungsquelle des Spültanks (11) bildet, die in Fluidverbindung mit der Retentatzone (7) steht, wobei die Fluidverbindung zwischen der Retentatzone (7) des Filtrationsmoduls (4) und dem Spültank (11) mindestens eine Fest/Flüssig-Trennvorrichtung (12) umfasst.

11. Verfahren zur Filtration einer Flüssigkeit, insbesondere Wein, nach Anspruch 10, **dadurch gekennzeichnet, dass** die Anlage (1) zur Filtration einem der Ansprüche 2 bis 9 entspricht.

## Claims

1. Installation (1) for filtering a liquid, in particular wine, comprising at least one filtration unit (2), a washing unit (3) for the filtration unit (2), and a control unit (20), said filtration unit (2) comprising at least one tangential filtration module (4), the or each tangential filtration module (4) comprising an enclosure (5) housing at least one cloggable filtering material (6), such as a membrane, dividing the enclosure (5) into at least one retentate zone (7) equipped with at least one inlet (8) for admitting liquid to be filtered and at least one permeate zone (9) equipped with at least one outlet (10) for discharging filtered liquid, and said washing unit (3) comprising at least one tank, referred to as washing tank (11), connected by a fluid circulation circuit to the permeate zone (9) of the or of at least one of the filtration modules (4), **characterized in that** the fluid circulation circuit connecting the or at least one of the washing tanks (11) of the washing unit (3) to the permeate zone (9) of the or of at least one of the filtration modules (4) is a circuit (17) for washing the filtering material (6) of said filtration module (4) that is configured to wash the filtering material (6) of the filtration module by countercurrent circulation of fluid from the washing tank (11) through the filtration module (4), **in that** said washing tank (11) associated with the washing circuit (17) for said filtration module (4) is in fluidic communication with the retentate zone (7) of said filtration module (4), this retentate zone (7) forming the or a source for supplying fluid to said washing tank (11), and **in that** the fluidic communication between the retentate zone (7) of the filtration module (4) and the washing tank (11) comprises at least one liquid/solid separation device (12).

2. Installation (1) for filtering a liquid according to Claim 1, **characterized in that** the or at least one of the liquid/solid separation devices (12) equipping the fluidic communication between the retentate zone (7) of the filtration module (4) and the washing tank (11) has at least one inlet (13) and one outlet (14), **in that** the inlet (13) of the liquid/solid separation device (12) is in fluidic communication with the retentate zone (7) of said filtration module (4) via what is referred to as a retentate circulation circuit (15) for supplying retentate to the liquid/solid separation device (12), and **in that** the outlet (14) of the liquid/solid separation device (12) is in fluidic communication with the washing tank (11) via what is referred to as a fluid supply circuit (16) for said washing tank (11).

3. Installation (1) for filtering a liquid according to Claim 2, **characterized in that** the washing circuit (17) and the retentate circulation circuit (15) are closable circuits each equipped with at least one shut-off member (18, 19) mounted so as to be movable between an open position and a closed position, and **in that** the control unit (20) is configured to control the shut-off members (18, 19) to switch them from one position to another.

4. Installation (1) for filtering a liquid according to Claim 3, **characterized in that** the installation (1) comprises what is referred to as a filtration mode configuration in which the inlet (8) for admitting liquid to be filtered of the retentate zone (7) and the outlet (10) for discharging filtered liquid of the permeate zone (9), the inlet and outlet being closable, are in the open state and the shut-off members (18, 19) of the washing circuit (17) and retentate circulation circuit (15) are in the closed state, and what is referred to as a washing mode configuration in which the closable admission inlet (8) and the closable discharge outlet (10) are in the closed state and the shut-off members (18, 19) of the washing circuit (17) and retentate circulation circuit (15) are in the open state.

5. Installation (1) for filtering a liquid according to any of Claims 2 to 4, **characterized in that** the fluid supply circuit (16) for the washing tank (11) comprises at least one closure member (21) of said circuit having an open state and a closed state for said circuit, and **in that** the control unit (20) is configured to control the switching of said closure member (21) from one state to another.

6. Installation (1) for filtering a liquid according to Claim 5, considered in combination with Claim 4, **characterized in that** the control unit (20) is configured to, in the filtration mode configuration, successively control the switching of said closure member (21) from one state to another for the fluid supply circuit (16) for the washing tank (11).

7. Installation (1) for filtering a liquid according to Claim 5, considered in combination with Claim 4 or Claim 6, **characterized in that** the control unit (20) is configured to, in the filtration mode configuration, successively control the switching of said closure member (21) from a state corresponding to an open state for the fluid supply circuit (16) for the washing tank (11) to a state corresponding to a closed state for said fluid supply circuit (16) for the washing tank (11).

8. Installation (1) for filtering a liquid according to any of Claims 1 to 7, **characterized in that** the installation (1) comprises a device (22) for determining a parameter representative of clogging of the filtering material (6) of said filtration module (4).

9. Installation (1) for filtering a liquid according to Claim 8 considered in combination with Claim 3, **characterized in that** the control unit (20) is configured to control at least the shut-off member (18) of the washing circuit (17) and the shut-off member (19) of the retentate circulation circuit (15) as a function of the data provided by the device (22) for determining a parameter representative of clogging of the filtering material (6) of said filtration module (4).

10. Method for filtering a liquid, in particular wine, with a filtration installation (1) comprising at least one filtration unit (2) and a washing unit (3) for the filtration unit (2) and a control unit (20), said filtration unit (2) comprising at least one tangential filtration module (4), the or each tangential filtration module (4) comprising an enclosure (5) housing at least one cloggable filtering material, such as a membrane, dividing the enclosure (5) into at least one retentate zone (7) equipped with at least one inlet (8) for admitting liquid to be filtered and at least one permeate zone (9) equipped with at least one outlet (10) for discharging filtered liquid, and said washing unit (3) comprising at least one tank, referred to as washing tank (11), connected by a fluid circulation circuit to the permeate zone (9) of the or of at least one of the filtration modules (4), **characterized in that**, for the or at least one of the washing tanks (11) of the washing unit (3) for which the fluid circulation circuit connecting said washing tank (11) to the permeate zone (9) of the or of at least one of the filtration modules (4) is a circuit (17) for washing the filtering material (6) of said filtration module (4) that is configured to wash the filtering material (6) of the filtration module by countercurrent circulation of fluid from the washing tank (11) through the filtration module (4), said method comprises a step of supplying fluid to the washing tank (11) from the retentate zone (7) of said filtration module (4), this retentate zone (7) forming the or a source for supplying fluid to said washing tank (11) in fluidic communication with said retentate zone (7), the fluidic communication between the retentate zone (7) of the filtration module (4) and the washing tank (11) comprising at least one liquid/solid separation device (12).

11. Method for filtering a liquid, in particular wine, according to Claim 10, **characterized in that** the filtration installation (1) is in accordance with any of Claims 2 to 9.
